# EUROPÄISCHE PATENTSCHRIFT

(11) **EP 2 247 405 B1**
(45) Veröffentlichungstag und Bekanntmachung des Hinweises auf die Patenterteilung: **04.05.2011**
(21) Anmeldenummer: 09710360.0
(22) Anmeldetag: 06.02.2009
(51) Int. Cl.: B23Q 1/48, B23Q 3/04, A61C 13/00

(54) **AUFSPANNVORRICHTUNG FÜR EINE RECHNERGESTEUERTE, SPANABHEBENDE BEARBEITUNGSMASCHINE**
CLAMPING DEVICE FOR A COMPUTER-CONTROLLED MACHINING CENTER
DISPOSITIF DE FIXATION POUR UNE MACHINE D'USINAGE PAR ENLÈVEMENT DE COPEAUX PILOTÉE PAR ORDINATEUR

(30) Priorität: 15.02.2008 AT 2522008
(43) Veröffentlichungstag der Anmeldung: 10.11.2010
(60) Teilanmeldung: 10010966.9
(73) Patentinhaber: STEGER, Heinrich, 39031 Bruneck (IT)
(72) Erfinder: STEGER, Heinrich, 39031 Bruneck (IT)
(74) Vertreter: Gangl, Markus
(86) Internationale Anmeldenummer: PCT/EP2009/000858
(87) Internationale Veröffentlichungsnummer: WO 2009/100863

(56) Entgegenhaltungen:
- EP-A- 1 201 351
- WO-A-02/45614
- DE-A1-102006 027 397
- DE-U1-202006 015 334
- GB-A- 2 293 994

## Beschreibung

Die Erfindung betrifft eine CAD/CAM - Fräseinrichtung gemäss dem Oberbegriff von Anspruch 1 (siehe, z.B., GB-2293994-A).

Bei einem bekannten CAD/CAM-System zur Herstellung von zahntechnischen Werkstücken wird zunächst ein Modell des Zahnstumpfes dreidimensional vermessen und computergesteuert die Struktur des herzustellenden Werkstückes berechnet. Anhand dieser Daten wird ein Fräsprogramm für eine Fräsmaschine berechnet, die aus einem Formrohling die gewünschte Struktur herausfräst. Der Formrohling besteht dabei aus vorgesinterem Zirkonoxid, das im Vergleich zu durchgesintertem Material wesentlich weicher ist. Das auf diese Weise hergestellte zahntechnische Werkstück wird anschließend fertiggesintert.

Die bisher bekannten Bearbeitungsmaschinen zum Fräsen von Keramikwerkstücken orientieren sich an klassischen 3-Achs-Fräsmaschinen und sind deshalb nur eingeschränkt für eine anspruchsvolle Freiformflächenbearbeitung, wie sie bei zahntechnischen Werkstücken benötigt wird, geeignet. So muss bei den bekannten Frässystemen das Werkstück u. a. zur Bearbeitung der zweiten Seite umgespannt werden, was selbstredend Ungenauigkeiten zur Folge haben kann.

Aufgabe der vorliegenden Erfindung ist es daher, eine rechnergesteuerte, spanabhebende Bearbeitungsmaschine der eingangs erwähnten Art zu schaffen, die eine präzise Herstellung von zahntechnischen Werkstücken bei gleichzeitig einfacher Bedienung erlaubt und die zudem eine kostengünstige Lösung darstellt.

Erfindungsgemäß wird diese Aufgabe durch eine Fräseinrichtung nach Anspruch 1 gelöst.

Auf diese Weise wird erreicht, dass zwei der notwendigen fünf Bewegungsachsen zur Freiformflächenbearbeitung über die Drehbarkeit bzw. Schwenkbarkeit des Formrohlings ermöglicht werden.

Ein bevorzugtes Ausführungsbeispiel der Erfindung sieht vor, dass die Trägerplatte an der verschiebbar gelagerten Haltevorrichtung um eine zu ihrer Hauptebene im Wesentlichen parallelen Drehachse drehbar gelagert ist, wobei die Drehachse des in der wenigstens einen Durchtrittsöffnung schwenkbar angeordneten Formrohlings mit der Drehachse der Trägerplatte einen Winkel von vorzugsweise 90° einschließt. Auf diese Weise ergibt sich eine besonders stabile Lösung, wobei die Lagepositionierung der Trägerplatte in einfacher Weise über einen direkt auf die Lagerung der Trägerplatte wirkenden Antriebsmotor realisiert werden kann.

Eine einfache und zudem spannungsfreie Befestigungsmöglichkeit für den Formrohling in der Durchtrittsöffnung ergibt sich, wenn - wie ein weiteres Ausführungsbeispiel vorsieht - der Formrohling in der wenigstens einen Durchtrittsöffnung mittels eines im Wesentlichen scheibenförmigen Halteelementes anordenbar bzw. angeordnet ist, wobei eine einfache und sichere Befestigung des Formrohlings gegeben ist, wenn der Formrohling in einer Durchtrittsöffnung des scheibenförmigen Halteelementes angeordnet, vorzugsweise geklebt, ist.

Gemäß einer weiteren bevorzugten Ausführungsform der Erfindung erfolgt die schwenkbare Anordnung des Formrohlings in der wenigstens einen Durchtrittsöffnung mittels einer Spannvorrichtung zum Fixieren des Formrohlings, wobei die Spannvorrichtung wenigstens um eine zur Hauptebene der Trägerplatte parallelen Drehachse schwenkbar an dieser angeordnet ist, wobei ein sicherer Halt des Formrohlings gewährleistet werden kann, wenn die Spannvorrichtung im Wesentlichen ringförmig, den Formrohling zumindest teilweise umschließend, ausgebildet ist und der Formrohling mittels des scheibenförmigen Halteelementes in der Spannvorrichtung anordenbar bzw. angeordnet ist.

Eine einfache Befestigungsmöglichkeit für den im scheibenförmigen Halteelement angeordneten Formrohling wird dabei erreicht, wenn die Spannvorrichtung wenigstens eine Klemmeinrichtung zum lösbaren Fixieren des Halteelementes aufweist, wobei es sich für eine einfache Handhabung als günstig herausgestellt hat, wenn wenigstens eine Klemmeinrichtung eine vorzugsweise mittels einer Stellschraube feststellbare Klemmbacke aufweist.

Anders ausgedrückt, erfolgt die Befestigung des Formrohlings mittels eines scheibenförmigen Halteelementes in der Durchtrittsöffnung einer zweiteilig ausgebildeten Trägerplatte, wobei die beiden vorzugsweise ringförmig ausgebildeten Teile der Trägerplatte koaxial angeordnet und um zwei zueinander im Wesentlichen normale Drehachsen verschwenkbar sind.

Gemäß einem besonders bevorzugten Ausführungsbeispiel der Erfindung ist dabei vorgesehen, dass die Trägerplatte um eine zu ihrer Hauptebene im Wesentlichen parallelen Drehachse schwenkbar an der Haltevorrichtung gelagert ist und genau eine vorzugsweise kreisförmige Durchtrittsöffnung aufweist, in der eine ringförmige Spannvorrichtung zum Fixieren des Formrohlings mittels eines scheibenförmigen Halteelementes um eine Drehachse, die mit der Drehachse der Trägerplatte einen im Wesentlichen rechten Winkel einschließt und im Wesentlichen parallel zur Hauptebene der Trägerplatte verläuft, schwenkbar gelagert ist.

Eine kompakte Bauweise der Aufspannvorrichtung ergibt sich gemäß einem weiteren Ausführungsbeispiel der Erfindung, wenn die verschiebbar gelagerte Haltevorrichtung bügelförmig, vorzugsweise im Wesentlichen U-förmig, ausgebildet ist und zwei im Wesentlichen parallele Schenkel sowie einen die beiden Schenkel verbindenden Steg aufweist, wobei die Trägerplatte zwischen den seitlichen Schenkeln der bügelförmigen Haltevorrichtung drehbar gelagert ist.

Dabei kann eine besonders geringe Bauhöhe erreicht werden, wenn der maximale Abstand der Drehachse der Trägerplatte zum Steg der bügelförmigen Haltevorrichtung kleiner als der maximale Abstand von der Drehachse zum äußeren Rand der Trägerplatte ist, sodass die bügelförmige Haltevorrichtung den Drehwinkel der Trägerplatte beschränkt bzw. als Anschlag für die Trägerplatte dient.

Dabei kann eine allseitige Bearbeitung des Formrohlings auch dann schon erreicht werden, wenn der Drehwinkel für die Trägerplatte kleiner als 150° ist, wobei eine geringe Bauhöhe der Aufspannvorrichtung und gleichzeitig eine allseitige Bearbeitung des Formrohlings gewährleistet wird, wenn der Drehwinkel für die Trägerplatte bei etwa 100° liegt.

Weiters sieht die Erfindung vor, dass der Formrohling um wenigstens eine Drehachse über einen Winkel größer als 270° drehbar in der wenigstens einen Durchtrittsöffnung gelagert ist, wobei es sich als günstig herausgestellt hat, wenn der Formrohling über einen Winkel um 360° drehbar ist.

Das heißt, um den Formrohling von allen Seiten her bearbeiten zu können und auf diese Weise komplizierte Raumformen zu realisieren, ist es ausreichend, wenn der Formrohling in eine Richtung um 360° drehbar bzw. verschwenkbar und normal dazu um einen Drehwinkel von etwa 100° schwenkbar gelagert ist.

Weitere Vorteile und Einzelheiten der Erfindung werden anhand der nachfolgenden Figurenbeschreibung unter Bezugnahme auf die in der Zeichnung dargestellten Ausführungsbeispiele näher erläutert. Darin zeigt
- Fig. 1: perspektivisch ein erstes Ausführungsbeispiel einer Aufspannvorrichtung,
- Fig. 2a - 2b: Ausführungsbeispiele mit verschwenkter Aufspannvorrichtung,
- Fig. 3a - 3c: ein Ausführungsbeispiel einer erfindungsgemäßen Bearbeitungsmaschine in einer Perspektive, einer Ansicht und einer Draufsicht und
- Fig.4: perspektivisch ein Ausführungsbeispiel einer Positioniervorrichtung.

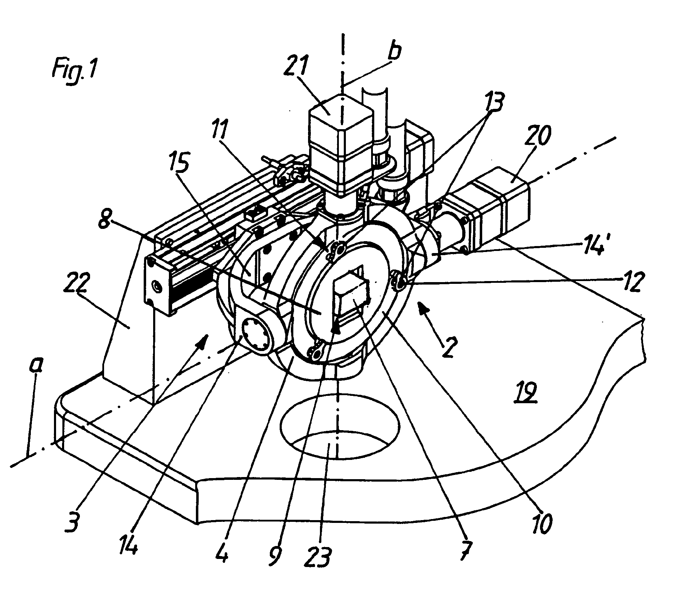

Fig. 1 zeigt in einer Perspektive ein erstes Ausführungsbeispiel einer Aufspannvorrichtung 2. Die Aufspannvorrichtung 2 ist über die bügelförmige Haltevorrichtung 3 verschiebbar an einem Sockel 22 angeordnet. Der Sockel 22 ist auf einer Basisplatte 19 einer rechnergesteuerten spanabhebenden Bearbeitungsmaschine 1 derart angeordnet, dass sich die Staubdurchtrittsöffnung 23 in der Basisplatte 19 direkt unterhalb des zu bearbeitenden Formrohlings 7 befindet.

Der Formrohling 7 ist in einer Durchtrittsöffnung 9 eines scheibenförmigen Halteelementes 8 befestigt, beispielsweise geklebt und wird mittels dieses scheibenförmigen Halteelementes 8 in der Spannvorrichtung 10 befestigt. Dazu weist die Spannvorrichtung 10 mehrere Klemmeinrichtungen 11 auf, wobei jede Klemmeinrichtung 11 eine Klemmbacke 13 umfasst, die mittels einer Stellschraube 12 arretiert wird, sodass das scheibenförmige Halteelement 8 mit dem darin befestigten Formrohling 7 lagefixiert werden kann.

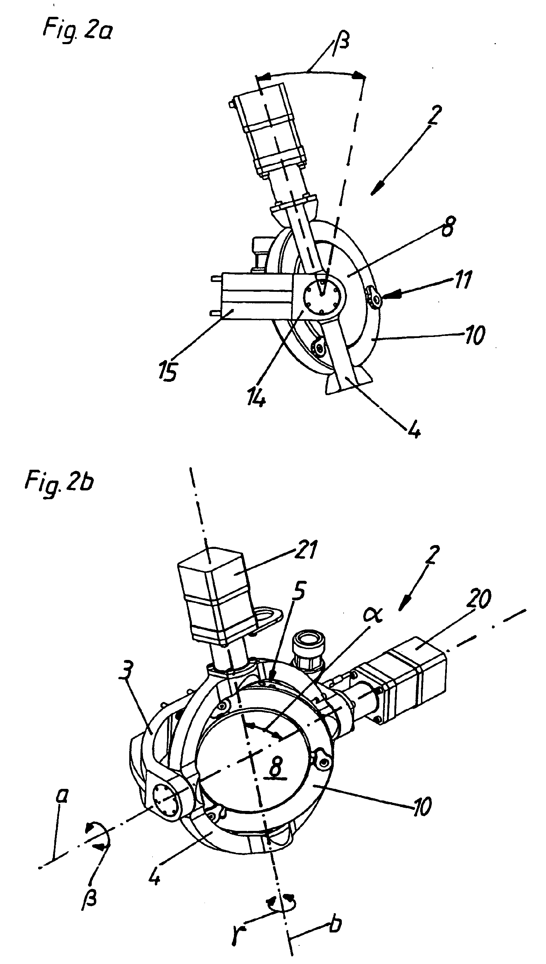

Wie insbesondere aus den Figuren 2a und 2b ersichtlich, ist die Trägerplatte 4 der Aufspannvorrichtung 2 an der Haltevorrichtung 3 um die Drehachse a drehbar gelagert, wobei ist der Abstand von der Drehachse a zum Steg 15 kleiner ist, als der Abstand von der Drehachse zum äußeren Rand der Trägerplatte 4, wodurch der Drehwinkel β der Trägerplatte 4 vom Steg 15 der Haltevorrichtung 3 beschränkt wird.

In der Durchtrittsöffnung 5 der ringförmig ausgebildeten Trägerplatte 4 ist die ebenfalls ringförmig ausgebildete Spannvorrichtung 10 um die Drehachse b, die mit der Drehachse a einen rechten Winkel α einschließt um einen Drehwinkel y von 360° drehbar angeordnet.

Anders ausgedrückt wird die Trägerplatte von zwei koaxialen Ringen gebildet, von denen der äußere Ring drehbar an der Haltevorrichtung und der innere Ring drehbar am äußeren Ring gelagert ist, wobei die Drehachsen des äußeren und des inneren Ringes einen Winkel von 90° einschließen.

Die Verschwenkung bzw. Drehung der Trägerplatte 4 um die Drehachse a sowie des Spannmechanismus 10 um die Drehachse b erfolgt beim dargestellten Ausführungsbeispiel rechnergesteuert über Antriebseinheiten 20, 21.

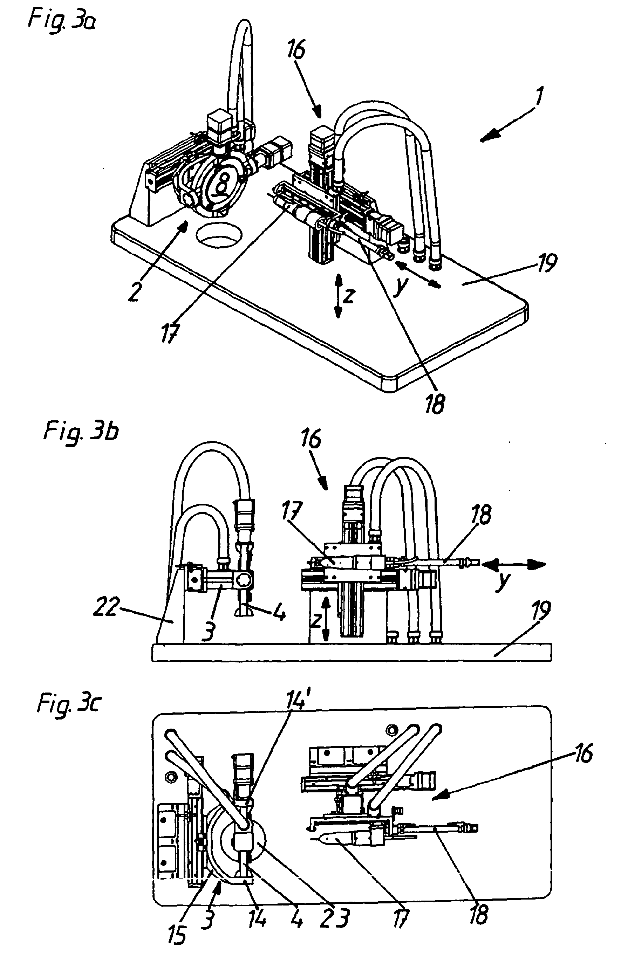

In den Fig. 3a bis 3c ist ein Ausführungsbeispiel einer erfindungsgemäßen CAD/CAM-Fräseinrichtung 1 dargestellt, die eine Aufspannvorrichtung 2 aufweist. Horizontal beabstandet von der Aufspannvorrichtung 2 ist auf der Basisplatte 19 eine Positioniervorrichtung 16 für ein Bearbeitungswerkzeug 17 angeordnet. Das Bearbeitungswerkzeug 17 ist an der Positioniervorrichtung 16 in eine erste Bewegungsrichtung z verschiebbar gelagert und wird, nachdem es in die entsprechende vertikale Lage gebracht wurde, mittels eines Betätigungselementes 18 das beim gezeigten Ausführungsbeispiel von einer pneumatischen Kolbenzylindereinheit gebildet wird, in Bewegungsrichtung y in Richtung der Aufspannvorrichtung 2 bzw. von dieser weg bewegt.

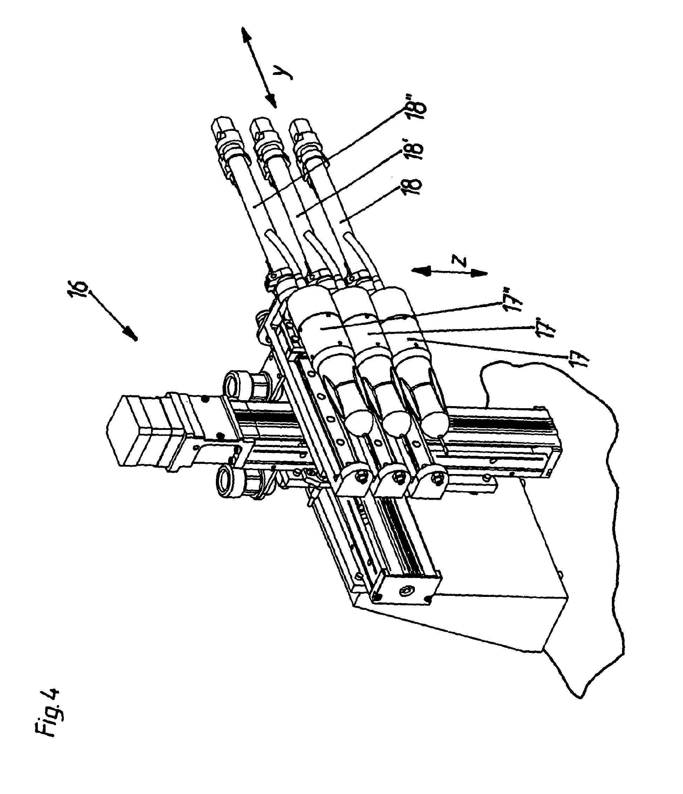

Fig. 4 zeigt ein bevorzugtes Ausführungsbeispiel einer erfindungsgemäßen Positioniervorrichtung 16. Bei diesem Ausführungsbeispiel sind an der Positioniervorrichtung 16 drei Bearbeitungswerkzeuge 17, 17', 17" in Bewegungsrichtung z gemeinsam verschiebbar angeordnet, wobei die Positioniervorrichtung 16 für jedes der Bearbeitungswerkzeuge 17, 17', 17" ein Betätigungselement 18, 18', 18" in Form einer pneumatischen Kolbenzylindereinheit aufweist. Durch diese Ausführung ergibt sich der Vorteil, dass auch bei der Durchführung unterschiedlicher Fräsvorgänge das Bearbeitungswerkzeug 17, 17', 17" nicht wie bisher üblich gewechselt werden muss, sondern es wird in einfacher Weise durch Verfahren in y und z Richtung das jeweils benötigte Bearbeitungswerkzeug 17, 17', 17" in die Arbeitsposition eingebracht.

Die dargestellten Ausführungsbeispiele von Aufspannvorrichtungen der Fräseinrichtung sind selbstverständlich nicht in einschränkendem Sinne zu verstehen, sondern eben nur einzelne Beispiele von zahlreichen Möglichkeiten, den Erfindungsgedanken einer Aufspannvorrichtung mit einer drehbar gelagerten Trägerplatte in deren Durchtrittsöffnung ein Formrohling drehbar lagerbar ist, zu realisieren.

## Patentansprüche

1. CAD/CAM-Fräseinrichtung zur Herstellung von zahntechnischen Werkstücken, mit einer Aufspannvorrichtung für einen Formrohling (7), wobei die Aufspannvorrichtung eine Haltevorrichtung (3) aufweist, an der eine Trägerplatte (4) zur Aufnahme des Formrohlings (7) um eine zu ihrer Hauptebene im Wesentlichen parallelen Drehachse (a) drehbar gelagert ist, wobei die Trägerplatte (4) wenigstens eine Durchtrittsöffnung (5) zur Aufnahme des Formrohlings (7) aufweist, und wobei; die Haltevorrichtung (3) verschiebbar gelagert ist, **dadurch gekennzeichnet, dass** der Formrohling (7) in der wenigstens einen Durchtrittsöffnung (5) mittels einer Spannvorrichtung (10) schwenkbar um eine Drehachse (b) gelagert ist, welche im Wesentlichen parallel zur Hauptebene der Trägerplatte (4) verläuft und mit der Drehachse (a) der Trägerplatte (4) einen Winkel (α) einschließt.

2. CAD/CAM-FräseinriChtung nach Anspruch 1, **dadurch gekennzeichnet, dass** die Spannvorrichtung (10) im Wesentlichen ringförmig, den Formrohling (7) zumindest teilweise umschließend, ausgebildet ist.

3. CAD/CAM-Fräseinrichtung nach Anspruch 2, **dadurch gekennzeichnet, dass** die Spannvorrichtung (10) wenigstens eine Klemmeinrichtung (11) zum lösbaren Fixieren des Halteelementes (8) aufweist.

4. CAD/CAM-Fräseinrichtung nach Anspruch 3, **dadurch gekennzeichnet, dass** wenigstens eine Klemmeinrichtung (11) eine vorzugsweise mittels einer Stellschraube (12) feststellbare Klemmbacke (13) aufweist.

5. CAD/CAM-Fräseinrichtung nach einem der Ansprüche 1 bis 4, **dadurch gekennzeichnet, dass** der Formrohling (7) in der Spannvorrichtung (10) mittels eines im Wesentlichen scheibenförmigen Halteelementes (8) anordenbar bzw. angeordnet ist.

6. CAD/CAM-Fräseinrichtung nach Anspruch 5, **dadurch gekennzeichnet, dass** der Formrohling (7) in einer Durchtrittsöffnung (9) des scheibenförmigen Halteelementes (8) angeordnet, vorzugsweise geklebt, ist

7. CAD/CAM-Fräseinrichtung nach einem der Ansprüche 1 bis 6, **dadurch gekennzeichnet, dass** der Formrohling (7) um die wenigstens eine Drehachse (b) über einen Winkel (γ) größer als 270° drehbar in der wenigstens einen Durchtrittsöffnung (5) gelagert ist.

8. CAD/CAM-Fräseinrichtung nach Anspruch 7, **dadurch gekennzeichnet, dass** der Formrohling (7) über einen Winkel (γ) um 360° drehbar ist.

9. CAD/CAM-Fräseinrichtung nach einem der Ansprüche 1 bis 8, **dadurch gekennzeichnet, dass** Winkel (α) zwischen der Drehachse (a) und der Drehachse (b) 90° beträgt.

10. CAD/CAM-Fräseinrichtung nach einem der Ansprüche 1 bis 8, **dadurch gekennzeichnet, dass** die Anordnung aus Trägerplatte (4) und Spannvorrichtung (10) von zwei koaxialen Ringen gebildet wird, wobei ein äußerer Ring die Trägerplatte (4) bildet und um die Drehachse (a) drehbar an der Haltevorrichtung (3) gelagert ist und ein innerer Ring die Spannvorrichtung (10) bildet und um die Drehachse (b) am äußeren Ring gelagert ist, wobei die Drehachsen (a, b) des äußeren und inneren Ringes einen winkel von 90° einschließen.

## Claims

1. A CAD/CAM milling device for the production of dental-technology workpieces, comprising a clamping device for a shaping blank (7), wherein the clamping device has a holding device (3) on which a carrier plate (4) for receiving the shaping blank (7) is mounted rotatably about an axis of rotation (a) that is substantially parallel to its main plane, wherein the carrier plate (4) has at least one through-opening (5) for receiving the shaping blank (7), and wherein the holding device (3) is mounted displaceably, **characterised in that** the shaping blank (7) is mounted in the at least one through-opening (5) by means of a clamping arrangement (10) pivotably about an axis of rotation (b) which extends substantially parallel to the main plane of the carrier plate (4) and includes an angle (α) with the axis of rotation (a) of the carrier plate (4).

2. A CAD/CAM milling device according to claim 1, **characterised in that** the clamping arrangement (10) is of a substantially annular configuration at least partially surrounding the shaping blank (7).

3. A CAD/CAM milling device according to claim 2, **characterised in that** the clamping arrangement (10) has at least one gripping device (11) for releasably fixing the holding element (8).

4. A CAD/CAM milling device according to claim 3, **characterised in that** at least one gripping device (11) has a gripping jaw (13) which can preferably be secured by means of a setting screw (12).

5. A CAD/CAM milling device according to one of claims 1 to 4, **characterised in that** the shaping blank (7) is or can be arranged in the clamping arrangement (10) by means of a substantially disc-shaped holding element (8).

6. A CAD/CAM milling device according to claim 5, **characterised in that** the shaping blank (7) is arranged, preferably glued, in a through-opening (9) of the disc-shaped holding element (8).

7. A CAD/CAM milling device according to one of claims 1 to 6, **characterised in that** the shaping blank (7) is mounted in the at least one-through opening (5) rotatably about the at least one axis of rotation (b) over an angle (γ) of greater than 270°.

8. A CAD/CAM milling device according to claim 7, **characterised in that** the shaping blank (7) is rotatable through an angle (γ) around 360°.

9. A CAD/CAM milling device according to one of claims 1 to 8, **characterised in that** the angle (α) between the axis of rotation (a) and the axis of rotation (b) is 90°.

10. A CAD/CAM milling device according to one of claims 1 to 8, **characterised in that** the arrangement comprising the carrier plate (4) and the clamping arrangement (10) is formed by two coaxial rings, wherein an outer ring forms the carrier plate (4) and is mounted to the holding device (3) rotatably about the axis of rotation (a) and an inner ring forms the clamping arrangement (10) and is mounted to the outer ring about the axis of rotation (b), wherein the axes of rotation (a, b) of the outer and inner rings include an angle of 90°.

## Revendications

1. Dispositif de fraisage CFAO permettant la fabrication de pièces pour la technique dentaire, comprenant un dispositif de fixation pour une ébauche moulée (7), le dispositif de fixation comprenant un dispositif de maintien (3) sur lequel une plaque de support (4) servant à loger l'ébauche moulée (7) est placée de manière à pouvoir tourner autour d'un axe de rotation (a) sensiblement parallèle à son plan principal, la plaque de support (4) comprenant au moins une ouverture traversante (5) servant à loger l'ébauche moulée (7), et le dispositif de maintien (3) étant monté mobile, **caractérisé en ce que** l'ébauche moulée (7) est placée dans la ou les ouvertures traversantes (5) au moyen d'un dispositif de serrage (10) de manière à pouvoir pivoter autour d'un axe de rotation (b) s'étendant sensiblement parallèlement au plan principal de la plaque de support (4) et formant un angle (α) avec l'axe de rotation (a) de la plaque de support (4).

2. Dispositif de fraisage CFAO selon la revendication 1, **caractérisé en ce que** le dispositif de serrage (10) présente une forme sensiblement annulaire entourant au moins en partie l'ébauche moulée (7).

3. Dispositif de fraisage CFAO selon la revendication 2, **caractérisé en ce que** le dispositif de serrage (10) comprend au moins un dispositif de blocage (11) servant à la fixation libérable de l'élément de maintien (8).

4. Dispositif de fraisage CFAO selon la revendication 3, **caractérisé en ce qu'**au moins un dispositif de blocage (11) comprend une mâchoire de blocage (13) pouvant être de préférence bloquée au moyen d'une vis de serrage (12).

5. Dispositif de fraisage CFAO selon l'une quelconque des revendications 1 à 4, **caractérisé en ce que** l'ébauche moulée (7) est disposée ou peut être disposée dans le dispositif de serrage (10) au moyen d'un élément de maintien (8) sensiblement en forme de disque.

6. Dispositif de fraisage CFAO selon la revendication 5, **caractérisé en ce que** l'ébauche moulée (7) est disposée, de préférence collée, dans une ouverture traversante (9) de l'élément de maintien (8) en forme de disque.

7. Dispositif de fraisage CFAO selon l'une quelconque des revendications 1 à 6, **caractérisé en ce que** l'ébauche moulée (7) est placée dans la ou les ouvertures traversantes (5) de manière à pouvoir tourner autour de l'axe de rotation ou des axes de rotation (b) suivant un angle (γ) supérieur à 270°.

8. Dispositif de fraisage CFAO selon la revendication 7, **caractérisé en ce que** l'ébauche moulée (7) peut tourner suivant un angle (γ) de 360°.

9. Dispositif de fraisage CFAO selon l'une quelconque des revendications 1 à 8, **caractérisé en ce que** l'angle (α) formé par l'axe de rotation (a) et l'axe de rotation (b) mesure 90°.

10. Dispositif de fraisage selon l'une quelconque des revendications 1 à 8, **caractérisé en ce que** l'ensemble formé par la plaque de support (4) et le dispositif de serrage (10) est constitué de deux bagues coaxiales, une bague extérieure formant la plaque de support (4) et étant placée sur le dispositif de maintien (3) de manière à pouvoir tourner autour de l'axe de rotation (a) et une bague intérieure formant le dispositif de serrage (10) et étant placée sur la bague extérieure autour de l'axe de rotation (b), les axes de rotation (a, b) de la bague extérieure et de la bague intérieure formant un angle de 90°.
